# EUROPEAN PATENT SPECIFICATION

(11) **EP 2 173 193 B1**
(45) Date of publication and mention of the grant of the patent: **22.05.2013**
(21) Application number: 08774339.9
(22) Date of filing: 26.06.2008
(51) Int. Cl.: A23L 1/221, A23L 1/22, A23F 5/48, B01D 53/02

(54) **PROCESS AND APPARATUS FOR RECOVERING ODOROUS COMPOUNDS**
VERFAHREN UND VORRICHTUNG ZUR ISOLIERUNG VON DUFTVERBINDUNGEN
PROCEDE ET APPAREIL DE RECUPERATION DE COMPOSES ODORANTS

(30) Priority: 09.07.2007 IT MI20071369
(43) Date of publication of application: 14.04.2010
(60) Divisional application: 12186116.5
(73) Proprietor: Illycaffè S.p.A., 34147 Trieste (IT)
(72) Inventor: SUGGI LIVERANI, Furio, 34123 Trieste (IT); BROLLO, Gaia, 34131 Trieste (IT); LONZARICH, Valentina, 34144 Trieste (IT); ALVAREZ SAAVEDRA, Maria Cecilia, 1009 Pully (CH)
(74) Representative: Modiano, Micaela Nadia
(86) International application number: PCT/EP2008/058157
(87) International publication number: WO 2009/007246

(56) References cited:
- EP-A- 0 010 804
- EP-A- 0 028 043
- EP-A- 0 041 370
- EP-A- 0 353 806
- EP-A- 0 392 608
- EP-A- 0 497 547
- EP-A- 0 992 274
- WO-A-95/11595
- WO-A-96/33622
- DE-A1- 2 905 372
- DE-C- 25 666
- GB-A- 1 480 997

## Description

### Technical Field

The present invention relates to a process for recovering odorous compounds from a gas originating from a process for treating a food product and to the related apparatus. More particularly, the present invention relates to a process and an apparatus for recovering odorous compounds from the gas that originates from a process for treating roasted and/or ground coffee or cocoa or other food products.

### Background art

The background art regarding the recovery of odorous compounds which constitute the aroma of roasted and/or ground coffee or cocoa or from other food products provides complicated processes which involve several temperature ranges in order to condense in successive steps water, carbon dioxide, and finally the total aromatic fraction. Such steps, which are required in order to collect the aroma, are typically based on the presence of liquid nitrogen traps, which require systems being expensive and complex also in terms of their safe management. US Patent 4335149, for example, discloses the condensation of aromas recovered in a liquid nitrogen trap. Likewise, US Patent 5182926 discloses the condensation in liquid nitrogen of particles of aroma which are then separated from the water through a tubular porous filter.

The use of low temperatures to recover the aroma is disclosed for example in patent application US 20050112265, which deals with the use of a cryogenic condenser to condense gases and/or vapors of coffee in order to produce aromatic particles comprising a matrix of coffee which is soluble in water and an aromatic portion which originates from gases of coffee originating from different processes, such as vaporization of raw and roasted coffee beans, grinding of raw and roasted coffee beans and bean roasting. Finally, US Patent 5342638 discloses a process for the transfer of condensed coffee aroma, a so-called frost, to an oil.

In some cases, the coffee is also subjected to a thermal treatment in order to release a larger amount of volatile substances, therefore entailing a stress on the vegetable matrix which can then affect the quality of the final product. US Patent 5043177, for example, recovers aroma from ground coffee and transfers it to an adsorbent liquid, such as coffee oil. The vegetable material, especially coffee, is heated from 65 to 82°C. In other procedures known in the field, the coffee is wet and then heated to release vapors which are then sent to the cryocondensation areas. US Patent 6358552 provides for stripping of the coffee aroma from a mixture obtained by treating the ground product with an aqueous solution at 80-99°C, using certain organic compounds, such as furans and diketones, as indicators to assess the quality of the recovery process.

US Patent 4100305 resorts to steam stripping, by means of which the coffee is wet with water and placed in contact with steam at a certain pressure; the steam containing aroma is then condensed to produce a frost.

The methods known in the background art are characterized by relatively drastic operating conditions or by complex procedures, which accordingly cause the recovery of the odorous compounds that constitute for example the aroma of coffee to be particularly expensive.

Moreover, known processes do not focus attention on the release into the atmosphere of the high content of carbon dioxide and carbon monoxide of the gases that originate from coffee treatment processes, and therefore are not oriented toward the environmental aspect of the recovery process.

Finally, most known processes allow to recover the odorous compounds of aromas only in the form of a single fraction, without the possibility to divide the different components. When this is instead possible, problems such as the cost and complexity of the fractionation procedure are added to the other drawbacks cited earlier.

It is therefore necessary to provide a process which allows to recover the odorous compounds that constitute the aroma of the food products, such as for example coffee, simply and inexpensively. Moreover, this process should be environmentally compatible and should allow equally simply and inexpensively to fractionate the odorous compounds of the aroma.

EP 0 353 806 A discloses a process for increasing the aroma content of coffee, including obtaining a coffee grinder gas released as roasted coffee is ground, increasing the pressure of the coffee grinder gas thus obtained, and subsequently contacting such gas with roasted coffee.

### Disclosure of the Invention

The aim of the present invention is to provide a new process for recovering odorous compounds from a gas originating from a process for treating a food product which is capable of solving the problems cited above.

Within this aim, an object of the invention is to provide a method for recovering odorous compounds contained in the gas originating from a process for treating a food product by using process conditions which are bland particularly in terms of temperature and pressure.

Another object of the invention is to provide a process which reduces the introduction into the atmosphere of harmful gases such as carbon dioxide and carbon monoxide originating from the treatment of food products.

Another object of the invention is to provide a process in which fractionation of the collected aroma is achieved, so as to create a suitable aroma for a desired food-related application.

Moreover, an object of the present invention is to provide a process for recovering odorous compounds which is highly reliable, relatively easy to provide and at competitive costs.

In accordance with the invention, there is provided: a process for recovering, as described in claim 1 odorous compounds from a gas originating from a process for treating a food product; an apparatus for recovering odorous compounds from gases originating from a process for treating a food product, as described in claim 17; and a use, as a food ingredient, of a solid food matrix on which one or more odorous compounds have been adsorbed by means of said process.

### Brief Description of the Drawings

Further characteristics and advantages of the invention will become better apparent from the description of a preferred but not exclusive embodiment of the process and apparatus according to the invention, illustrated by way of non-limiting example in the accompanying drawings, wherein:
Figure 1 is a view of an apparatus for conducting the process according to the invention;
Figure 2 is a view of an apparatus for conducting the process according to the invention, according to a particular embodiment;
Figure 3 is a view of an apparatus for conducting the process according to the invention for recovering odorous compounds from roasted, roasted and ground and/or stored coffee, according to a preferred embodiment;

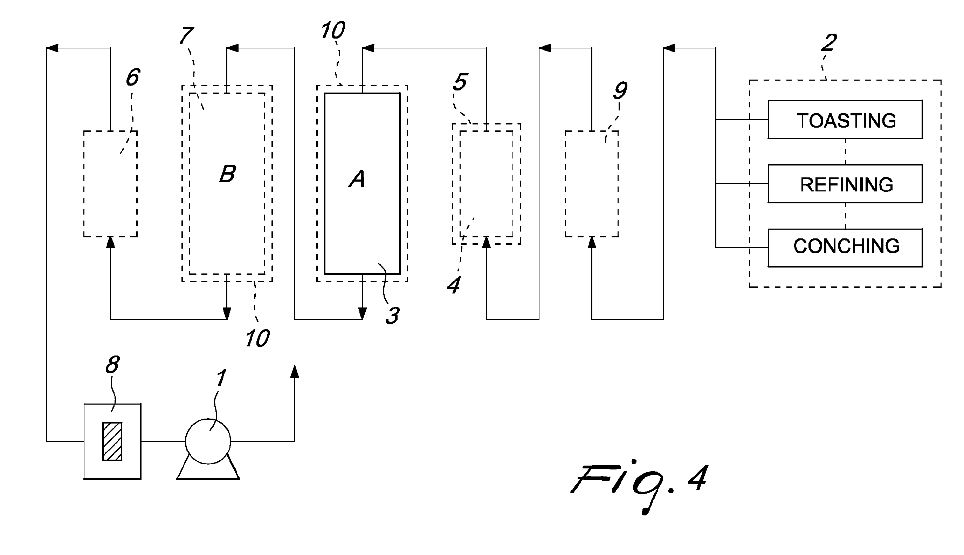

Figure 4 is a view of an apparatus for conducting the process according to the invention for recovering odorous compounds from cocoa, according to a preferred embodiment;

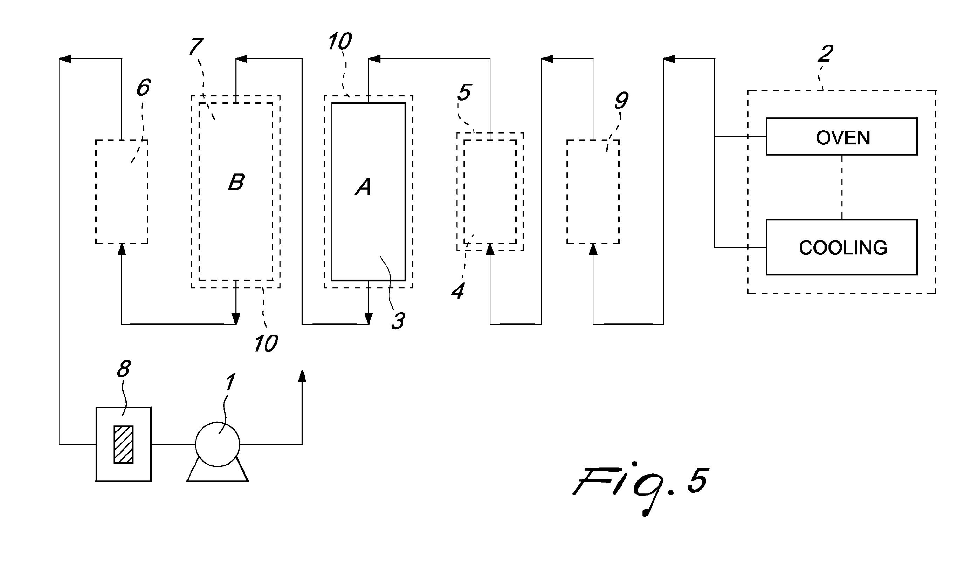

Figure 5 is a view of an apparatus for conducting the process according to the invention for recovering odorous compounds from a bakery product, according to a preferred embodiment;

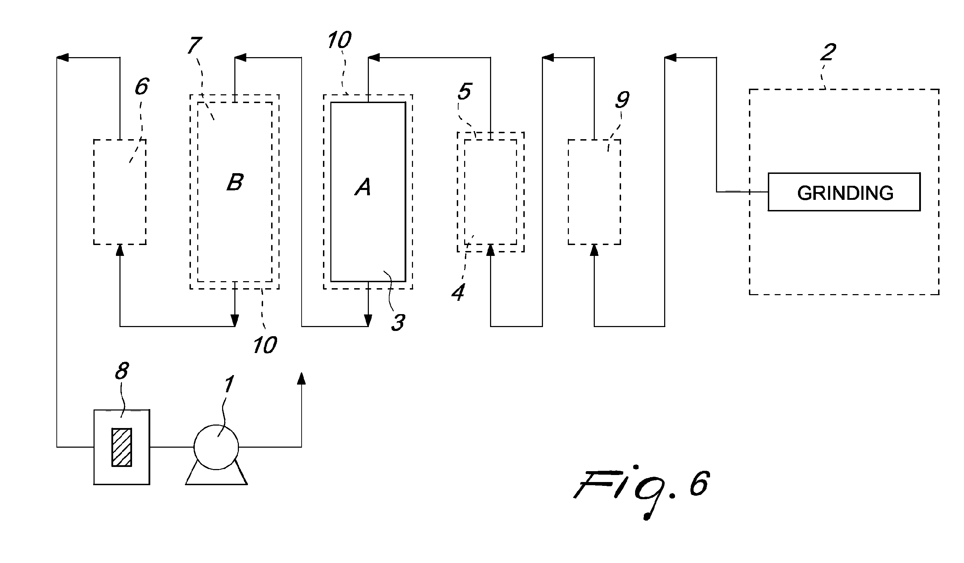

Figure 6 is a view of an apparatus for conducting the process according to the invention for recovering odorous compounds from dried fruit, according to a preferred embodiment;

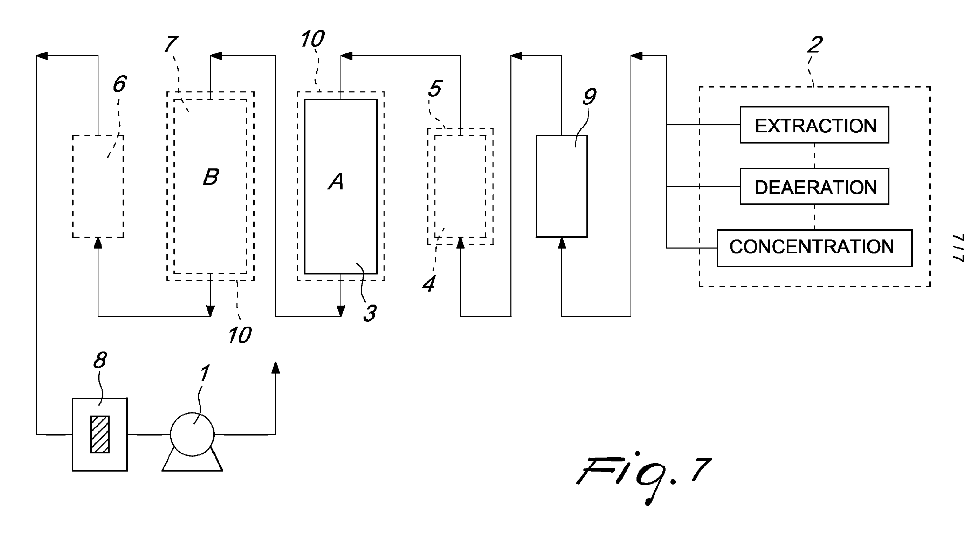

Figure 7 is a view of an apparatus for conducting the process according to the invention for recovering odorous compounds from fresh fruit, according to a preferred embodiment.

Although the process and the apparatus according to the invention have been conceived in particular to recover odorous compounds from a gas which originates from a process for treating coffee (roasting, grinding and storage), they can in any case be used more generally to recover odorous compounds or aromas from gases that originate from a process for treating food products. For example, the gases that originate from a process for treating a food product can be gases generated and/or released during steps such as roasting, grinding, storage, refining, conching, cooking and cooling, extraction, deaeration or concentration, or other processes for the treatment of food products.

An apparatus adapted to perform the process according to the invention is constituted substantially by a modular system, in which the illustrated components can be connected one another by means of suitable interconnection means, such as for example valve couplings along a pneumatic circuit, so as to include or not the components needed on the basis of the origin of the gases generated by processes for treatment in input and of the chemical and physical characteristics of the processed matrices.

### Ways of carrying out the Invention

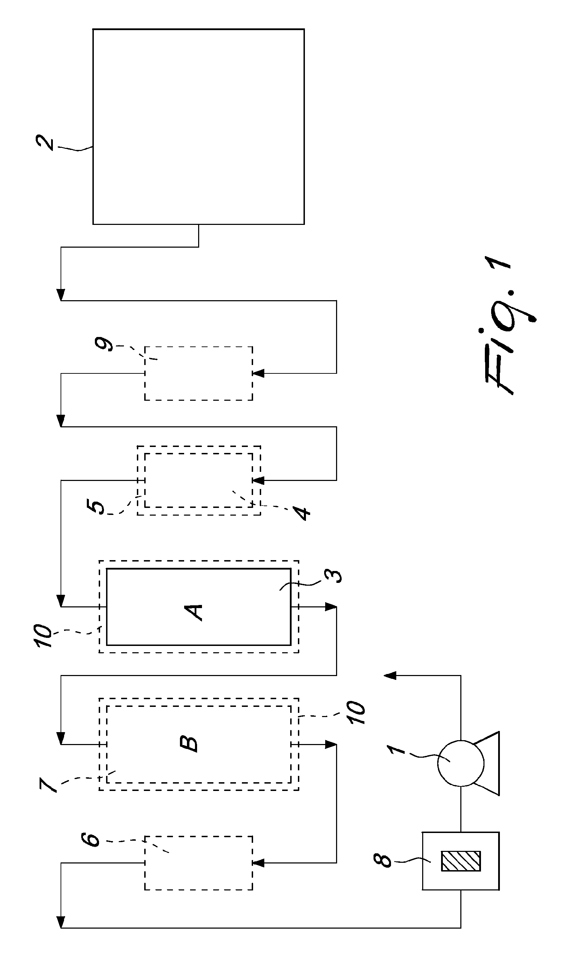

With reference to Figure 1, such apparatus comprises a vacuum pump 1 which is connected by means of a pneumatic circuit to a chamber 2, in which the gas that originates from processes for treating a food product is contained, so as to generate a partial vacuum in the chamber 2 and allow the gas contained therein to move through the apparatus.

As an alternative to the vacuum pump 1, it is possible to use another evacuation means to empty the chamber 2 of the gases that originate from a treatment process, for example a pump which injects under pressure into the chamber 2 an inert gas, such as for example nitrogen, which is capable of propelling the gases that originate from a treatment process through the several components arranged pneumatically in series within the apparatus.

The chamber 2, depending on the applications, can be a device for roasting (torrefying) coffee, a silo for storing roasted coffee, a device for grinding roasted coffee, a device for roasting cocoa beans, a device for refining cocoa, a device for conching, an oven for baking bakery products, a device for cooling bakery products, a device for grinding dried fruit, a device for extracting, deaerating or concentrating fruit or, in general, any device or container of an apparatus for food production wherein a gas which originates from a process for treating a food product can accumulate.

The vacuum or partial vacuum generated in the chamber 2 conveys the gas that arrives from a treatment process into the pneumatic circuit toward at least one adsorption column 3, which is connected pneumatically between the chamber 2 and the pump 1 and contains at least one solid food matrix A, onto which the odorous compounds that constitute the aroma of the food product are fixed.

The type of solid food matrix used influences the separation of the odorous compounds, since each of the usable matrices has a different selectivity with respect to the odorous compounds and therefore adsorbs preferentially the compounds with which it has a higher chemical and physical affinity. This may allow to perform a fractionated recovery of odorous compounds by using a plurality of columns arranged in series, each containing a different food matrix. Therefore, in accordance with this application, an embodiment of the apparatus according to the invention may contain at least one second adsorption column 7, which is connected pneumatically in series to the first column 3 and contains a second solid food matrix B which is different from the first solid food matrix A.

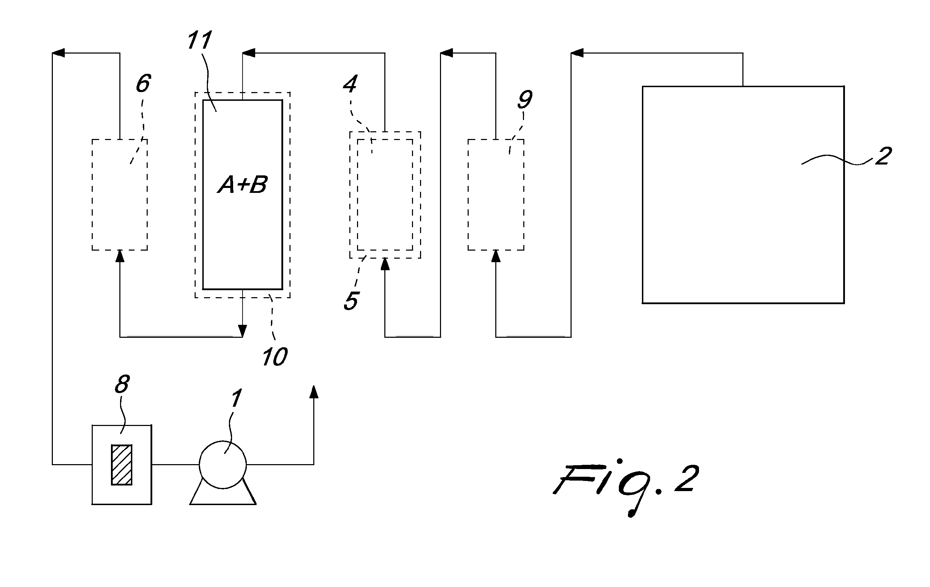

As an alternative, or as an addition, with reference to Figure 2, at least one adsorption column 11 may contain both a first solid food matrix A and a second solid food matrix B mixed together. In this manner it is possible to achieve recovery of the odorous compounds as a whole, without fractionation.

In an advantageous embodiment of the apparatus according to the invention, each adsorption column 3, 7 or 11 may be provided with a cooling jacket 10, which by decreasing the kinetic energy of the odorous substances facilitates their fixation on the food matrix and their stabilization. Typically, the temperature of the cooling jacket 10 has a value from 0 to 30°C, preferably from 5 to 20°C.

Generally, the odorous compounds recovered by the adsorption columns can subsequently be released from the matrices contained therein by solubilization and/or dissolution of said matrices.

An adsorption column for carbon dioxide 4 is provided, so that the carbon dioxide contained in the gas that arrives from processes for treating the food product may be removed. By way of the modularity of the apparatus, such adsorption column for carbon dioxide 4 may be inserted upstream of the adsorption columns 3,7 for odorous compounds or downstream thereof, and in any case upstream of any adsorption column for carbon monoxide 6 along the pneumatic circuit that connects the columns 3,7 in series to the chamber 2 and to the pump 1.

For some food matrices, the presence of CO₂ has an important role in the quality of the result. The adsorption column 4 contains an adsorbent matrix which is specific for carbon dioxide and blocks the molecule by way of a chemical or physical mechanism. Such matrix can be selected from the group that comprises ascarite, soda lime, sodium hydroxide on granular silica (decarbite®), a natural zeolite, a clay, an activated charcoal and silica. In particular, the natural zeolite can be for example mordenite or erionite. Moreover, the clay can be an activated clay.

Advantageously, the adsorption column for carbon dioxide 4 may be provided with a cooling jacket 5 which absorbs any heat generated by the exothermic reaction for adsorption of carbon dioxide.

Moreover, the adsorption column for carbon dioxide 4 may be used regardless of the type of apparatus; for example, it can be comprised in an apparatus for cryocondensation of aromas. In particular, said apparatus may comprise a cryocondensation device which has an inlet for a gas which arrives from a process for treating a food product and an outlet for a cryocondensed gas derived from said input gas, characterized in that it comprises an adsorption column for carbon dioxide which is connected to said inlet of the cryocondensation device so as to remove the carbon dioxide from said input gas.

Downstream of the adsorption columns 3,7 for the odorous compounds, but upstream of the vacuum pump 1, the apparatus further comprises an adsorption column for carbon monoxide 6. This gas is present in a significant volumetric concentration in the process gases of roasted and/or ground coffee and is known to be a gas which is harmful for human beings due to its ability to form stable complexes with blood hemoglobin. The adsorption column for carbon monoxide contains an adsorbent matrix which is specific for this gas. Such matrix may be selected from the group comprising hemoglobin, a zeolite, catalase, myoglobin, and cytochrome.

The apparatus may also comprise a system for protecting the pump 1, such as for example a liquid nitrogen trap 8.

Finally, a device for removing water vapor 9 may be integrated directly downstream of the chamber 2 that contains the gases that originate from a process for treating a food product, in order to remove the water in water vapor form that might be present in the gas before the adsorption columns. Such device may be for example a coil condenser.

In another embodiment, the apparatus according to the invention may comprise a device (not shown) selected from the group comprising a granulator, an encapsulator, a microencapsulator, a nanoencapsulator and a melt-extrusion device. In this manner it is possible to combine with the technology for recovering odorous compounds a technique for stabilizing the food matrix that allows to prepare granulates, encapsulates, microencapsulates, nanoencapsulates or agglomerations containing the recovered odorous compounds.

The process for recovering the odorous compounds according to the invention, which can be implemented in the apparatus described above, operates as follows. The vacuum pump 1 generates a partial vacuum in the chamber 2, which displaces the gas that arrives from a process for treating the food product toward the series of adsorption columns, each of which contains at least one solid food matrix, on which the odorous compounds contained in the gas are adsorbed by direct contact of the solid matrix with said gas. The expression "direct contact" is understood to mean that the isolation of the odorous compounds, i.e., of the fraction of aroma of the gas, occurs without passing through intermediate stages, for example without passing through a condensation stage.

Subsequently, the vacuum pump 1 releases the residual gas into the atmosphere.

Conveniently, the process according to the invention may be performed by working at ambient temperature, without resorting to extreme temperatures. Moreover, the process may be performed by applying downstream of the apparatus a partial vacuum so that the pressure inside the chamber 2 is lower than atmospheric pressure, for example approximately 50 kPa (500 millibars) lower than atmospheric pressure 100 kPa (1000 millibars). Of course, the person skilled in the art is capable of selecting without difficulty the type of pump 1 that is most appropriate to create in the chamber 2 the desired pressure depending on the size of the apparatus.

Advantageously, the food product from whose processing the gas containing the odorous compounds is obtained may be selected from the group comprising roasted coffee, roasted and ground coffee, roasted cocoa, roasted and ground cocoa, roasted nuts, bakery products and fruit.

The expression "solid food matrix" is understood to reference an edible material in the form of powder, paste (where the term "paste" designates a mass constituted by water and solid food ingredients), a mass which is solid at the process temperature (for example 24°C) and optionally melts at higher temperatures or a liquid carried on a solid support (in this case, the adsorbent agent would be the liquid).

A plurality of solid food matrices has been evaluated for use in the process described here: such matrices have been selected from the group comprising a starch, a cyclodextrin, a maltodextrin, microcrystalline cellulose, carboxymethyl cellulose, an alginate, a carrageenan, gum arabic, coconut oil, roasted and ground coffee, soluble coffee, cocoa in powder, soluble preparations of cocoa in powder, powdered milk and mixtures thereof.

Several starches exist depending on their different origin and therefore in the process according to the invention the starch may be selected from the group comprising a wheat starch, a corn starch, a rice starch, a potato flour starch, and a manioc flour starch. Moreover, the starch may be a modified starch, such as for example a pre-gelatinized starch, a fluidified starch, a cross-linked starch or a stabilized starch.

A cyclodextrin is a starch degradation compound obtained through bacterial means and characterized by the ability to form inclusion complexes with a large variety of molecules. Different forms of cyclodextrin exist, which differ from each other in the number of glucose units that constitute them. In the process according to the invention, the cyclodextrin may be constituted by a number of glucose units from 6 to 12; for example, it may be constituted by 7 glucose units (β-cyclodextrin).

A carrageenan is a hydrocolloid compound extracted from seaweed of the Rhodophyceae family, whose use is known in the food industry. For example, in the process according to the invention the solid food matrix may be a carrageenan selected from the group comprising a kappa carrageenan, an iota carrageenan and a lambda carrageenan.

Advantageously, the process according to the invention may also use soluble coffee as a solid food matrix for adsorbing the odorous compounds. For example, the soluble coffee may be in the form of powder, pellets or granules. The soluble coffee, which in output from the production process is usually poor in aromas, is thus enriched with odorous compounds by direct contact with the gas that arrives from a treatment process, particularly the gas that arrives from the process for roasting, grinding or storing coffee.

Advantageously, the process according to the invention may also use cocoa powder or soluble preparations thereof as a solid food matrix for adsorption of the odorous compounds. The cocoa powder, or its soluble preparation, in this manner is enriched with odorous compounds by direct contact with the gas that arrives from the cocoa roasting, grinding or conching process.

The process according to the invention further comprises the step of eliminating the carbon dioxide from the gas that arrives from a treatment process before or after adsorption of the odorous compounds. This allows to improve the adsorption yield of the columns with solid food matrix. Conveniently, the elimination of carbon dioxide occurs, as shown, by adsorption on a specific matrix for carbon dioxide. Such matrix may be selected from the group comprising ascarite, soda lime, decarbite®, a natural zeolite, a clay, an activated charcoal and silica. In particular, the natural zeolite may be for example mordenite or erionite. Moreover, the clay may be an activated clay.

The process according to the invention further comprises the step of eliminating the carbon monoxide from the gases that originate from a process for treating the food product after the step for adsorption of the odorous compounds; this allows to avoid releasing into the atmosphere the carbon monoxide, which is particularly harmful for health. The elimination of carbon monoxide occurs by adsorption on a matrix which is specific for carbon monoxide. Such matrix may be selected from the group comprising hemoglobin, a zeolite, catalase, myoglobin, and cytochrome.

In another advantageous embodiment, the process according to the invention may further comprise the step of eliminating any water vapor that is present in the gases that originate from a process for treating a food product.

The use as a food ingredient of a solid food matrix on which one or more odorous compounds are adsorbed allows to utilize the solid matrices used in the process according to the invention to disperse in a food product the odorous compounds that are trapped within such matrix. For this purpose, the solid food matrix may be selected from the group comprising a starch, a cyclodextrin, a maltodextrin, microcrystalline cellulose, carboxymethyl cellulose, an alginate, a carrageenan, gum arabic, coconut oil, roasted and ground coffee, soluble coffee, cocoa powder, soluble preparations of cocoa powder, milk powder and mixtures thereof.

The starches into which the odorous compounds have been adsorbed with the process according to the invention may therefore be used conventionally in the food industry both as nutritional ingredients and as thickening, binding, stabilizing or gelatinizing agents. In particular, if the matrix contains pre-gelatinized starches, as a consequence of the adsorption of the odorous compound such starches may be used to prepare bakery products (biscuits), confectionery garnishes, sweets and cold puddings. If the matrix contains fluidified starches, once the odorous compounds have been adsorbed, such starches may be used to coat sweets, for biscuit glaze, or as emulsifiers. The cross-linked starches, after adsorption of the odorous compounds according to the invention, may be applied in food products that are packaged in sterilized boxes, creams and desserts. The stabilized starches, after adsorption of the odorous compounds according to the invention, may instead be used as thickening agents for garnishes for fruit cakes.

Cyclodextrins, particularly β-cyclodextrin, after adsorption of odorous compounds by means of the process according to the invention has occurred, may be used in the food sector to include aromas and essences and improve their stability by changing their state of aggregation from liquid to solid, in order to stabilize vitamins and neutralize the taste of bitter substances.

Maltodextrins may be used in the food industry as a carrier, for example for aromas, as encapsulating agents for different food ingredients, such as sweeteners. Moreover, since maltodextrins have functional properties as viscosity, texture and mouthfeel optimizers, they can prevent crystallization and bind water. The maltodextrin matrices in which the odorous compounds have been adsorbed with the process according to the invention may be applied therefore in candies, jelly gums, beverages, isotonic beverages, in the glaze of bakery products and in extruded snacks, in milk-based products and ice creams, in coffee toppings, imitation cheeses, powdered mixtures for beverages, frozen foods, in meat and for encapsulating aromas.

Carboxymethyl cellulose and microcrystalline cellulose may be used as sources of fiber in diet products, as non-caloric thickening agents, as stabilizers, opacifiers, carriers, anti-agglomeration agents or adjuvants in the extrusion process. Among the food-related applications wherein the carboxymethyl cellulose and/or microcrystalline cellulose matrices onto which the odorous compounds have been adsorbed with the process according to the invention may be used, include chocolate beverages, glazes, creams, toppings, desserts and ice creams.

Alginates have properties of thickening, stabilizing, gelling agents and adjuvants in the formation of films. They keep a suspension uniform, improve its appearance and consistency, improve mouthfeel and stabilize emulsions. Therefore, the matrices of alginates in which the odorous compounds have been adsorbed with the process according to the invention may be applied in several foods, such as bakery and confectionery products, glazes, food emulsions, fruit juices, beverages, fruit fillings, ice creams and sorbets, fruit syrups and chocolate, spreadable preparations with a low fat content, yogurts, powder preparations and frozen foods.

Carrageenans perform several functions, allow to bind moisture (retain water), stabilize emulsions, suspend particles, control rheological properties, produce gels which are stable at ambient temperature. A carrageenan matrix in which the odorous compounds have been adsorbed with the process according to the invention may be used in confectionery products or other water-based elements as a gelling and stabilizing agent. Moreover, it may be used in the dairy industry as a gelling, texturizing and stabilizing agent, for example in sweets based on milk, flans, puddings, aromatized milk, coffee cream, milk with chocolate and ice creams. Moreover, the matrix may be used in jams with low sugar content, in sugared almonds to form the coating/icing, in syrups and toppings to give viscosity, in bread and in soya-based products as stabilizers and texturizers. Optionally, the matrix containing carrageenans may also be used in animal feed, in the pharmaceutical field, in the cosmetic field, in products for oral hygiene and household products.

Since gum arabic is an important ingredient in alcohol-free beverages and in gummy candies, where its main function is to prevent crystallization of sugars, the gum arabic matrix in which the odorous compounds are adsorbed by means of the process according to the invention may be used for the same purposes as traditional gum arabic, as well as an excipient in the food industry, or as an emulsifier and stabilizer in bakery products, as a foam stabilizer in beverages and to fix aromas in the production of encapsulates and aromas in powder.

Soluble coffee (powder, pellets or in granular form) may be used specifically as a matrix for adsorbing aromas originating from the coffee roasting/grinding/storage process. The soluble coffee, which in output from its production process is usually poor in aromas, with the process according to the invention is enriched with odorous compounds by direct contact with the gas. The soluble coffee may thus be used in the food sector for the instant preparation of beverages and as an aromatizing ingredient for ice creams and semi-processed ingredients for ice creams, desserts and sweets to be eaten with a spoon (puddings and creams), bakery products (cakes and biscuits), chocolates and beverages based on cocoa, yogurt, candies and jellies. The soluble coffee is thus enriched in a natural manner, allowing to save on the use of natural or artificial flavors which would have to be added in the final production steps to increase sensory impact. The roasted and ground coffee itself may also be used as an adsorbent for the aroma contained in the process gases of the roasted bean. This allows to enrich a coffee which, as a consequence of inadequate treatment processes, has undergone a reduction in its natural and inherent aroma content.

Cocoa in powder (or soluble preparations thereof) also may be used as a solid food matrix to adsorb odorous compounds. Cocoa in powder or a soluble preparation thereof is thus enriched with odorous compounds by direct contact with the gas arriving from the cocoa roasting, grinding or conching process. There are several applications in the food field for enriched cocoa powder or its enriched soluble preparations ranging from instant-preparation cocoa-based beverages (hot chocolate) to confectionery products (sweets to be eaten with a spoon, creams, puddings, ice creams and semi-processed ingredients for ice creams), to confectionery (candy, chocolate drinks, chocolate candy), to liqueurs, bakery products, doughs. Similarly to soluble coffee, enrichment of cocoa powder may allow to dispense with the use of aromas to be added to enhance sensory impact during consumption for cocoa powder as well.

Skimmed or whole milk powder may be reconstituted and drunk as is, especially to supply milk to scarcely supplied regions with limited transportation costs. As an alternative, it may be used in the food or pharmaceutical industry. It may be used for the preparation of infant formulas, milk chocolate, candies and beverages. Its use is allowed in the production of food preparations, in the production of ice creams, in the production of sausages and other industrial products, such as cheeses of the so-called "cream cheese" type, spreadable products, bakery products (cakes, biscuits, bread).

### EXAMPLE

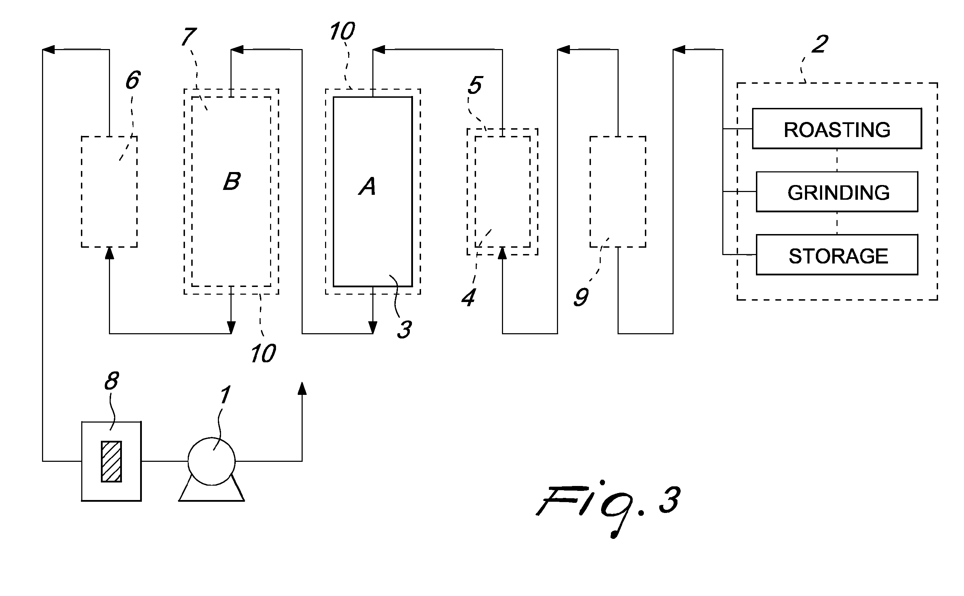

The gas that arrives from the step for grinding roasted coffee beans is made to flow within a series of columns loaded with respective food matrices in the form of powder or paste (Figure 3). In Table 1 shown hereinafter, the column on the left lists some of the odorous compounds detected in the gas being considered, while the columns on the right list the contents of the solid food matrices used in each column. In the table, the "X" sign indicates, for each matrix, the presence of the adsorbed compounds indicated in the left column, measured according to the gas chromatography (GC) and GC-mass technique on the head space of the respective food matrix after the passage of the gas. It can be seen that some matrices have affinity for some compounds and not for others in a selective manner. For example, starch is the only matrix, among the listed ones, that retains the last six compounds and more generally is also the matrix with the largest number of retained compounds (17 in all). Starch, cyclodextrin and soluble coffee further retain some sulfurate compounds which are indicators of freshness in coffee.

In the case of soluble coffee, the product treated according to the invention has a richer aroma spectrum or has the same aromatic substances but in a higher concentration.

**TABLE 1**

| **Compound** | **Starch** | **Alginate** | **Carrageenan** | **Cyclodextrin** | **Soluble coffee** |
|---|---|---|---|---|---|
| Isobutanal | X | | | | X |
| Valeraldehyde | X | | X | | X |
| 2-methylbutanal | | | X | | X |
| 3-methylbutanal | X | X | X | X | X |
| 2-butanone | | X | | X | |
| Diacetyl | X | X | X | X | X |
| 2,3-pentanedione | X | | | X | |
| Pyridine | X | X | X | X | |
| Pyrazine | X | X | | | |
| Methylpyrazine | X | X | X | X | |
| Furan | X | X | | | |
| 3-2H-furanone | X | | X | X | |
| Methylpyrrole | | X | | X | X |
| H₂S | X | | | X | |
| 2-methylpropanal | | | | X | |
| 2-methylfuran | | | X | | |
| Dimethyldisulfide | | | | X | X |
| Ethanol | | | | | X |
| 3-methylfuran | | X | | | |
| Hexanal | | | X | | |
| Butyrolactone | X | | | | |
| 1,2-propenediol-3-methoxy | X | | | | |
| 2,6-dimethylpyrazine | X | | | | |
| 2,5-dimethylpyrazine | X | | | | |
| Dimethylsulfide | X | | | | |
| Thiopropane | X | | | | |

In practice it has been found that the process and the apparatus according to the invention fully achieve the intended aim and objects, since the use of solid food matrices allows simple and inexpensive recovery of the odorous compounds from food products, which normally would be lost, without resorting to devices and technologies of high complexity or cost and in bland operating conditions in terms of pressure and temperature.

Moreover, it has been observed that the process and the apparatus according to the invention allow to trap selectively groups of different compounds, so as to allow the creation of suitable aromas for specific foods, by way of the use of systems with a plurality of columns in series, each containing a different food matrix, or columns filled with a plurality of matrices.

It has also been observed that the process and the apparatus according to the invention advantageously achieve the aim of leading to a release into the atmosphere of a smaller amount of gases which can pollute, since the food matrices are capable of adsorbing and removing from the gas in input a wide range of volatile organic compounds and inorganic compounds and at the same time the use of adsorption systems for carbon dioxide and carbon monoxide traps these gases before they are released into the atmosphere.

Moreover, the apparatus according to the invention is effective in providing a system which can be adapted easily to different food production plants thanks to its modular form with which its separate elements can be connected and disconnected from the pneumatic circuit according to the requirements.

Finally, the process and the apparatus according to the invention allow to trap the odorous compounds and optionally store them for subsequent use, since the food matrices on which the odorous compounds have been adsorbed can be used as aromatizers.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A process for recovering odorous compounds from a gas originating from a process for treating a food product, comprising the steps of:
containing a gas that originates from the process for treating the food product in a chamber (2);
eliminating carbon dioxide from the gas in a carbon dioxide adsorption column (4);
adsorbing the odorous compounds on at least a first solid food matrix (A) and a second solid food matrix (B) contained in at least one solid food matrix adsorption column (3,7,11) by direct contact of the first and second solid food matrices (A,B) with the gas;
eliminating carbon monoxide from the gas in a carbon monoxide adsorption column (6) after the step of adsorbing the odorous compounds;
providing a pneumatic circuit connected to said chamber (2) and containing said carbon dioxide adsorption column (4), said at least one solid food matrix adsorption column (3,7,11), and said carbon monoxide adsorption column (6), wherein said carbon monoxide adsorption column (6) is connected downstream of said at least one solid food matrix adsorption column (3,7,11) and is also connected downstream of said carbon dioxide adsorption column (4); and
performing the process by applying downstream of the pneumatic circuit by means of a vacuum pump (1) a partial vacuum so that the pressure inside said chamber (2) is lower than atmospheric pressure for moving the gas from said chamber (2) through said pneumatic circuit.

2. The process according to claim 1, wherein the elimination of carbon dioxide occurs by adsorption on a matrix which is specific for carbon dioxide.

3. The process according to claim 2, wherein the carbon dioxide-specific matrix is selected from the group comprising ascarite, soda lime, decarbite®, a natural zeolite, a clay, an activated charcoal and silica.

4. The process according to claim 3, wherein the natural zeolite is selected from the group comprising mordenite and erionite; or the clay is an activated clay.

5. The process according to claim 4, wherein the elimination of carbon monoxide occurs by adsorption on a carbon monoxide-specific matrix.

6. The process according to claim 5, wherein the carbon monoxide-specific matrix is selected from the group comprising hemoglobin, a zeolite, catalase, myoglobin, and cytochrome.

7. The process according to one or more of the preceding claims, wherein the food product is selected from the group comprising roasted coffee, roasted and ground coffee, roasted cocoa, roasted and ground cocoa, dried fruit, a bakery product and fruit.

8. The process according to one or more of the preceding claims, **characterized in that** it is performed at room temperature.

9. The process according to one or more of the preceding claims, **characterized in that** said partial vacuum within said chamber (2) is not greater than 50 kPa (500 millibars) with respect to atmospheric pressure.

10. The process according to one or more of the preceding claims, wherein the solid food matrix is in the form of powder, paste, mass which is solid at the temperature of said process, or a liquid carried on a solid support.

11. The process according to one or more of the preceding claims, wherein the solid food matrix is selected from the group comprising at least one among a starch, a cyclodextrin, a maltodextrin, microcrystalline cellulose, carboxymethyl cellulose, an alginate, a carrageenan, gum arabic, coconut oil, roasted and ground coffee, soluble coffee, cocoa powder, soluble preparations of cocoa powder, milk powder and mixtures thereof.

12. The process according to claim 11, wherein;
the starch is selected from the group comprising a wheat starch, a corn starch, a rice starch, a potato flour starch and a manioc flour starch; or
the cyclodextrin is constituted by a number of units of glucose from 6 to 12; or
the carrageenan is selected from the group comprising a kappa carrageenan, an iota carrageenan and a lambda carrageenan; or
the soluble coffee is in the form of powder, pellets or granules.

13. The process according to claim 11 or 12, wherein the starch is a modified starch.

14. The process according to claim 13, wherein the modified starch is selected from the group comprising a pre-gelatinized starch, a fluidified starch, a cross-linked starch and a stabilized starch.

15. The process according to claim 12, wherein the cyclodextrin is constituted by 7 glucose units.

16. The process according to one or more of the preceding claims, further comprising the step of eliminating water vapor from the gas that originates from processes for treating a food product before adsorbing the odorous compounds.

17. An apparatus for recovering odorous compounds from gases originating from processes for treating a food product, comprising:
a chamber (2) which contains a gas which originates from a process for treating a food product, said gas comprising odorous compounds;
means (1) for emptying the chamber (2) of said gas originating from a treatment process applying a partial vacuum so that the pressure inside said chamber (2) is lower than atmospheric pressure for moving the gas from said chamber (2) through a pneumatic circuit;
at least one adsorption column (3,7,11) on said pneumatic circuit, which contains at least a first solid food matrix and a second solid food matrix, and which is connected pneumatically on said pneumatic circuit to said chamber (2) so as to receive at least said odorous compounds evacuated from the chamber (2) by way of said emptying means (1);
a carbon dioxide adsorption column (4) which is connected pneumatically in series upstream or, alternatively, downstream on said pneumatic circuit of said at least one adsorption column (3,7,11); and
a carbon monoxide adsorption column (6), which is connected downstream of said at least one adsorption column (3,7,11) and which is also connected downstream of said carbon dioxide adsorption column (4).

18. The apparatus according to claim 17, wherein the chamber (2) containing the gas that originates from a process for treating a food product is selected from the group consisting of a coffee roasting device, a silo for storing roasted coffee, a device for grinding roasted coffee, a device for roasting cocoa beans, a device for refining cocoa, a device for conching, an oven for baking bakery products, a device for cooling bakery products, a device for grinding dried fruit and a device for extraction, deaeration or concentration of fruit.

19. The apparatus according to claim 17 or 18, wherein the at least one adsorption column comprises a single adsorption column (11) that contains said first solid food matrix and said second solid food matrix.

20. The apparatus according to claim 17 or 18, wherein said at least one adsorption column comprises a first adsorption column (3) which contains said first solid food matrix and a second adsorption column (7) which contains said second solid food matrix and is connected pneumatically in series to the first adsorption column (3).

21. The apparatus according to one or more of claims 17-20, wherein each adsorption column (3,7,11) containing a solid food matrix comprises an outer cooling jacket (10).

22. The apparatus according to claim 21, wherein the outer cooling jacket has a temperature ranging from 0 to 30°C, preferably from 5 to 20°C.

23. The apparatus according to claim 17, **characterized in that** the adsorption column (4) for carbon dioxide comprises an outer cooling jacket (5).

24. The apparatus according to one or more of claims 17-23, further comprising a device (9) for removing water vapor downstream of the chamber (2) that contains the gas that arrives from a treatment process, preferably wherein the device (9) for removing water vapor is a coil condenser.

25. The apparatus according to one or more of claims 17-24, further comprising a device which is selected from the group comprising a granulator, an encapsulator, a microencapsulator, a nanoencapsulator and a melt extrusion device.

26. The apparatus according to one or more of claims 17-25, wherein said emptying means is a vacuum pump (1) which is connected downstream of said at least one adsorption column (3,7,11).

27. Use as a food ingredient of a solid food matrix on which one or more odorous compounds are adsorbed, according to the process of one or more of claims 1 to 16.

28. The use according to claim 27, wherein the solid food matrix is selected from the group comprising a starch, a cyclodextrin, a maltodextrin, microcrystalline cellulose, carboxymethyl cellulose, an alginate, a carrageenan, gum arabic, coconut oil, roasted and ground coffee, soluble coffee, cocoa powder, soluble preparations of cocoa powder, milk powder and mixtures thereof, preferably wherein the matrix is soluble coffee.

## Patentansprüche

1. Verfahren zur Rückgewinnung von Geruchsstoffen aus einem Gas, das aus einem Verfahren zur Behandlung eines Lebensmittelprodukts stammt, das die Schritte aufweist:
Vorhalten eines Gases, das aus dem Verfahren zur Behandlung des Lebensmittelprodukts stammt, in einer Kammer (2);
Eliminieren von Kohlendioxid aus dem Gas in einer Kohlendioxid-Adsorptionssäule (4);
Adsorbieren der Geruchsstoffe auf wenigstens einer ersten Lebensmittelfeststoffinatrix (A) und einer zweiten Lebensmittelfeststoffmatrix (B), die in wenigstens einer Adsorptionssäule (3, 7, 11) mit Lebensmittelfeststoffmatrix enthalten sind, durch direkten Kontakt der ersten und der zweiten Lebensmittelfeststoffmatrizes (A, B) mit dem Gas;
Eliminieren von Kohlenmonoxid aus dem Gas in einer Kohlenmonoxid-Adsorptionssäule (6) nach dem Schritt der Adsorption der Geruchsstoffe;
Bereitstellen eines mit der Kammer (2) verbundenen Gaskreislaufs, der die Kohlendioxid-Adsorptionssäule (4), die wenigstens eine Lebensmittelfeststoff-Adsorptionssäule (3, 7, 11) und die Kohlenmonoxid-Adsorptionsäule (6) beinhaltet, wobei die Kohlenmonoxid-Adsorptionssäule (6) stromab der wenigstens einen Lebensmittelfeststoffmatrix-Adsorptionssäule (3, 7, 11) eingebunden ist und ebenfalls stromabwärts der Kohlendioxid-Adsorptionssäule (4) eingebunden ist; und
Durchführen des Verfahrens, indem stromab des Gaskreislaufs mittels einer Vakuumpumpe (1) ein partielles Vakuum angelegt wird, sodass der Druck innerhalb der Kammer (2) unterhalb vom. Atmosphärendruck liegt, um das Gas aus der Kammer (2) durch den Gaskreislauf zu bewegen.

2. Verfahren nach Anspruch 1, worin die Eliminierung des Kohlendioxids durch Adsorption auf einer Matrix geschieht, welche spezifisch für Kohlendioxid ist.

3. Verfahren nach Anspruch 2, worin die kohlendioxidspezifische Matrix ausgewählt ist aus der Gruppe enthaltend Ascarite, Natronkalk, Decarbite®, einen natürlichen Zeolith, einen Ton, eine Aktivkohle und Silica.

4. Verfahren nach Anspruch 3, worin der natürliche Zeolith ausgewählt ist aus der Gruppe enthaltend Mordenit und Erionit; oder der Ton ein aktivierter Ton ist.

5. Verfahren nach Anspruch 4, worin die Eliminierung von Kohlenmonoxid durch Adsorption auf einer kohlenmonoxidspezifisehen Matrix geschieht.

6. Verfahren nach Anspruch 5, worin die kohlenmonoxidspezifische Matrix ausgewählt ist aus der Gruppe enthaltend Hämoglobin, einen Zeolith, Katalase, Myoglobin und Cytochrom.

7. Verfahren nach einem oder mehreren der vorstehenden Ansprüche, worin das Lebensmittelprodukt ausgewählt ist aus der Gruppe enthaltend gerösteten Kaffee, gerösteten und gemahlenen Kaffee, gerösteten Kakao, gerösteten und gemahlenen Kakao, Trackenfrüchte, ein Bäckereierzeugnis und Früchte.

8. Verfahren nach einem oder mehreren der vorstehenden Ansprüche, **dadurch gekennzeichnet, dass** es bei Raumtemperatur durchgeführt wird.

9. Verfahren nach einem oder mehreren der vorstehenden Ansprüche, **dadurch gekennzeichnet, dass** das partielle Vakuum innerhalb der Kammer (2) nicht größer ist als 50 kPa (500 Millibar) bezogen auf Atmosphärendruck.

10. Verfahren nach einem oder mehreren der vorstehenden Ansprüche, worin die Lebensmittelfeststoffmatrix in Form von Pulver, einer Paste, einer Masse, die bei der Temperatur des Verfahrens fest ist, oder einer Flüssigkeit auf einem festen Träger vorliegt.

11. Verfahren nach einem oder mehreren der vorstehenden Ansprüche, worin die Lebensmittelfeststoffmatrix ausgewählt ist aus der Gruppe enthaltend wenigstens einen Bestandteil aus der Gruppe einer Stärke, eines Cyclodextrins, eines Maltodextrins, mikrokristalliner Cellulose, Carboxymethylcellulose, einem Alginat, einem Carageenan, Gummi Arabicum, Kokosnussöl, geröstetem und gemahlenem Kaffee, löslichem Kaffee, Kakaopulver, löslichen Zubereitungen von Kakaopulver, Milchpulver und Mischungen daraus.

12. Verfahren nach Anspruch 11, worin:
die Stärke ausgewählt ist aus der Gruppe enthaltend eine Weizenstärke, eine Maisstärke, eine Reisstärke, eine Kartoffelmehlstärke und eine Maniokmehlstärke; oder
das Cyclodextrin sich aus einer Anzahl von Glukoseeinheiten von 6 bis 12 zusammensetzt; oder
das Carrageenan ausgewählt ist aus der Gruppe enthaltend ein Kappa-Carrageenan, ein Jota-Carrageenan und ein Lambda Carrageenan; oder
der lösliche Kaffee in Form von Pulver, Pellets oder Granulat vorliegt.

13. Verfahren nach Anspruch 11 oder 12, worin die Stärke eine modifizierte Stärke ist.

14. Verfahren nach Anspruch 13, worin die modifizierte Stärke ausgewählt ist aus der Gruppe enthaltend eine vorgelierte Stärke, eine fluidifizierte Stärke, eine vernetzte Stärke, und eine stabilisierte Stärke.

15. Verfahren nach Anspruch 12, worin das Cyclodextrin sich aus sieben Glukoseeinheiten zusammensetzt.

16. Verfahren nach einem oder mehreren der vorstehenden Ansprüche, das weiter den Schritt umfasst, dass Wasserdampf aus dem Gas, das dem Prozess zur Behandlung eines Lebensmittelprodukts entstammt, eliminiert wird, bevor die Geruchsstoffe adsorbiert werden.

17. Vorrichtung zur Rückgewinnung von Geruchsstoffen aus Gasen, die Verfahren zur Behandlung von Lebensmittelprodukten entstammen, aufweisend:
eine Kammer (2), die ein Gas enthält, welches aus einem Verfahren zur Behandlung eines Lebensmittelprodukts stammt, wobei das Gas Geruchsstoffe aufweist;
Mittel (1) zum Abziehen des Gases, das aus dem Behandlungsverfahren entstammt, aus der Kammer (2) durch Anlegen eines partiellen Vakuums, sodass der Druck innerhalb der Kammer (2) geringer ist als Atmosphärendruck, um das Gas aus der Kammer (2) durch einen Gaskreisl auf zu bewegen;
wenigstens eine Adsorptionssäule (3, 7, 11) in dem Gaskreislauf, die wenigstens eine erste Lebensmittelfeststoffmatrix und eine zweite Lebensmittelfeststoffmatrix enthält und die pneumatisch über den Gaskreislauf mit der Kammer (2) verbunden ist, um wenigstens die Geruchsstoffe, die mit Hilfe der Mittel (1) zum Abziehen aus der Kammer (2) evakuiert wurden, zu erhalten;
eine Kohlendioxid-Adsorptionssäule (4), die pneumatisch in Serie stromaufwärts oder alternativ stromabwärts der wenigstens einen Adsorptionssäule (3, 7, 11) in den Gaskreislauf eingebunden ist; und
eine Kohlenmonoxid-Adsorptionssäule (6), die stromab der wenigstens einen Adsorptionssäule (3, 7, 11) eingebunden ist und die ebenfalls stromab der Kohlendioxid-Adsorptionssäule (4) eingebunden ist.

18. Vorrichtung nach Anspruch 17, worin die Kammer (2), die das Gas enthält, welches aus einem Verfahren zur Behandlung eines. Lebensimttelprodukts stammt, ausgewählt ist aus der Gruppe bestehend aus einer Kaffeeröstvorrichtung, einem Silo für die Lagerung von geröstetem Kaffee, einer Vorrichtung zum Mahlen von geröstetem Kaffee, einer Vorrichtung zum Rösten von Kakaobohnen, einer Vorrichtung zum Kakao Refining (Kakao verfeinern), einer Vorrichtung zum Conchieren, einem Ofen zum Backen von Backerzeugnissen, einer Vorrichtung zum Kühlen von Backerzeugnissen, einer Vorrichtung zum Mahlen getrockneter Früchte und einer Vorrichtung für die Bxtraktion, Entlüftung oder Konzentration von Früchten.

19. Die Vorrichtung nach Anspruch 17 oder 18, worin die wenigstens eine Adsorptionssäule eine einzelne Adsorptionssäule (11) aufweist, die die erste Lebens mittelfeststoffmatrix und die zweite Labensmittelfeststoffmatrix enthält.

20. Vorrichtung nach Anspruch 17 oder 18, worin die wenigstens eine Adsorptionssäule eine erste Adsorptionssäule (3) aufweist, die die erste Lebensmittelfeststoffmatrix enthält, und eine zweite Adsorptionssäule (7), die die zweite Lebensmittelfeststoffmatrix enthält und die pneumatisch in Serie mit der ersten Adsorptionssäule (3) angeschlossen ist.

21. Vorrichtung nach einem oder mehreren der Ansprüche 17 bis 20, worin jede Adsorptionssäule (3, 7, 11), die eine Lebensmiltelfeststoffmatrix enthält, einen äußeren Kühlmantel (10) aufweist.

22. Vorrichtung nach Anspruch 21, worin der äußere Kühlmantel eine Temperatur im Bereich von 0 bis 30 °C besitzt, vorzugsweise von 5 bis 20 °C.

23. Vorrichtung nach Anspruch 17, **dadurch gekennzeichnet, dass** die Adsoptionssäule (4) für Kohlendioxid einen äußeren Kühlmantel (5) aufweist.

24. Vorrichtung nach einem oder mehreren der Ansprüche 17 bis 23, welterhin eine Vorrichtung (9) für die Entfernung von Wasserdampf stromabwärts der Kammer (2) enthaltend, die das Gas, das aus dem Behandlungsprozess ankommt, enthält, wobei die Vorrichtung (9) zur Entfernung des Wasserdampfs vorzugsweise ein Kühler mit Wicklungen ist.

25. Vorrichtung nach einem oder mehreren der Ansprüche 17 bis 24, die weiterhin eine Vorrichtung umfasst, die ausgewählt ist aus der Gruppe enthaltend einen Granulator, einen Verkapseler, einen Mikroverkapseler, einen Nanoverkapseler und eine Schmelzextrusionsvorrichtung.

26. Vorrichtung nach einem oder mehreren der Ansprüche 17 bis 25, worin das Mittel zum Abziehen eine Vakuumpumpe (1) ist, die stromab der wenigstens einen Adsonptionssäule (3, 7, 11) angeschlossen ist.

27. Verwendung einer Lebensmittelfeststoffmatrix, an der ein oder mehrere Geruchsstoffe gemäß dem Verfahren nach einem oder mehreren der Ansprüche 1 bis 16 adsorbiert sind, als Lebensmittelbestandteil.

28. Verwendung nach Anspruch 27, worin die Lebensmittelfeststoffmatrix ausgewählt ist aus der Gruppe umfassend eine Stärke, ein Cyclodextrin, ein Maltodextrin, mikrokristalline Cellulose, Carboxymethylcellulose, ein Alginat, ein Carrageenan, Gummi Arabicum, Kokosnussöl, gerösteten und gemahlenen Kaffee, löslichen Kaffee, Kakaopulver, lösliche Zubereitungen aus Kakaopulver, Milchpulver und Mischungen daraus, wobei die Matrix vorzugsweise löslicher Kaffee ist.

## Revendications

1. Procédé de récupération de composés odorants à partir d'un gaz provenant d'un procédé de traitement d'un produit alimentaire, comprenant les étapes consistant à :
contenir un gaz qui provient du procédé de traitement du produit alimentaire dans une chambre (2) ;
éliminer le dioxyde de carbone du gaz dans une colonne d'adsorption de dioxyde de carbone (4) ;
adsorber les composés odorants sur au moins une première matrice alimentaire solide (A) et une deuxième matrice alimentaire solide (B) contenues dans au moins une colonne d'adsorption de matrice alimentaire solide (3, 7, 11) par contact direct des première et deuxième matrices alimentaires solides (A, B) avec le gaz ;
éliminer le monoxyde de carbone du gaz dans une colonne d'adsorption de monoxyde de carbone (6) après l'étape d'adsorption des composés odorants ;
prévoir un circuit pneumatique raccordé à ladite chambre (2) et contenant ladite colonne d'adsorption de dioxyde de carbone (4), ladite au moins une colonne d'adsorption de matrice alimentaire solide (3, 7, 11), et ladite colonne d'adsorption de monoxyde de carbone (6), ladite colonne d'adsorption de monoxyde de carbone (6) étant raccordée en aval de ladite au moins une colonne d'adsorption de matrice alimentaire solide (3, 7, 11) et étant également raccordée en aval de ladite colonne d'adsorption de dioxyde de carbone (4) ; et
réaliser le procédé en appliquant en aval du circuit pneumatique au moyen d'une pompe à vide (1) un vide partiel de manière à ce que la pression à l'intérieur de ladite chambre (2) soit inférieure à la pression atmosphérique pour déplacer le gaz de ladite chambre (2) à travers ledit circuit pneumatique.

2. Procédé selon la revendication 1, dans lequel l'élimination du dioxyde de carbone se produit par adsorption sur une matrice qui est spécifique au dioxyde de carbone.

3. Procédé selon la revendication 2, dans lequel la matrice spécifique au dioxyde de carbone est choisie dans le groupe comprenant l'ascarite, la chaux sodée, le Decarbite®, une zéolithe naturelle, une argile, un charbon actif et de la silice.

4. Procédé selon la revendication 3, dans lequel la zéolithe naturelle est choisie dans le groupe comprenant la mordénite et l'érionite ; ou l'argile est une argile activée.

5. Procédé selon la revendication 4, dans lequel l'élimination du monoxyde de carbone se produit par adsorption sur une matrice spécifique au monoxyde de carbone.

6. Procédé selon la revendication 5, dans lequel la matrice spécifique au monoxyde de carbone est choisie dans le groupe comprenant l'hémoglobine, une zéolithe, une catalase, de la myoglobine et un cytochrome.

7. Procédé selon une ou plusieurs des revendications précédentes, dans lequel le produit alimentaire est choisi dans le groupe comprenant le café torréfié, le café torréfié et moulu, le cacao torréfié, le cacao torréfié et moulu, les fruits séchés, les produits de boulangerie et les fruits.

8. Procédé selon une ou plusieurs des revendications précédentes, **caractérisé en ce qu'**il est réalisé à température ambiante.

9. Procédé selon une ou plusieurs des revendications précédentes, **caractérisé en ce que** ledit vide partiel à l'intérieur de ladite chambre (2) n'est pas supérieur à 50 kPa (500 millibars) par rapport à la pression atmosphérique.

10. Procédé selon une ou plusieurs des revendications précédentes, dans lequel la matrice alimentaire solide se présente sous la forme d'une poudre, d'une pâte, d'une masse qui est solide à la température dudit procédé, ou d'un liquide porté par un support solide.

11. Procédé selon une ou plusieurs des revendications précédentes, dans lequel la matrice alimentaire solide est choisie dans le groupe comprenant au moins un parmi un amidon, une cyclodextrine, une maltodextrine, une cellulose microcristalline, une carboxyméthylcellulose, un alginate, une carraghénine, de la gomme arabique, de l'huile de noix de coco, du café torréfié et moulu, du café soluble, de la poudre de cacao, des préparations solubles de poudre de cacao, du lait en poudre et leurs mélanges.

12. Procédé selon la revendication 11, dans lequel :
l'amidon est choisi dans le groupe comprenant un amidon de blé, un amidon de maïs, un amidon de riz, un amidon de farine de pomme de terre et un amidon de farine de manioc ; ou
la cyclodextrine est constituée d'un nombre d'unités de glucose de 6 à 12 ; ou
la carraghénine est choisie dans le groupe comprenant une kappa carraghénine, une iota carraghénine et une lambda carraghénine ; ou
le café soluble se présente sous forme de poudre, de pastilles ou de granules.

13. Procédé selon la revendication 11 ou 12, dans lequel l'amidon est un amidon modifié.

14. Procédé selon la revendication 13, dans lequel l'amidon modifié est choisi dans le groupe comprenant un amidon prégélatinisé, un amidon fluidifié, un amidon réticulé et un amidon stabilisé.

15. Procédé selon la revendication 12, dans lequel la cyclodextrine est constituée de 7 unités de glucose.

16. Procédé selon une ou plusieurs des revendications précédentes, comprenant en outre l'étape consistant à éliminer la vapeur d'eau du gaz qui provient des procédés de traitement d'un produit alimentaire avant l'adsorption des composés odorants.

17. Appareil de récupération de composés odorants à partir de gaz provenant de procédés de traitement d'un produit alimentaire, comprenant :
une chambre (2) qui contient un gaz qui provient d'un procédé de traitement d'un produit alimentaire, ledit gaz comprenant des composés odorants :
des moyens (1) pour débarrasser la chambre (2) dudit gaz provenant d'un procédé de traitement en appliquant un vide partiel de manière à ce que la pression à l'intérieur de ladite chambre (2) soit inférieure à la pression atmosphérique pour déplacer le gaz de ladite chambre (2) à travers un circuit pneumatique ;
au moins une colonne d'adsorption (3, 7, 11) sur ledit circuit pneumatique, qui contient au moins une première matrice alimentaire solide et une deuxième matrice alimentaire solide, et qui est raccordée pneumatiquement sur ledit circuit pneumatique à ladite chambre (2) de manière à recevoir au moins lesdits composés odorants évacués de la chambre (2) au moyen desdits moyens de vidange (1) ;
une colonne d'adsorption de dioxyde de carbone (4) qui est raccordée pneumatiquement en série en amont ou, en variante, en aval sur ledit circuit pneumatique de ladite au moins une colonne d'adsorption (3, 7, 11) ; et
une colonne d'adsorption de monoxyde de carbone (6), qui est raccordée en aval de ladite au moins une colonne d'adsorption (3, 7, 11) et qui est également raccordée en aval de ladite colonne d'adsorption de dioxyde de carbone (4).

18. Appareil selon la revendication 17, dans lequel la chambre (2) contenant le gaz qui provient d'un procédé de traitement d'un produit alimentaire est choisie dans le groupe constitué d'un dispositif de torréfaction de café, d'un silo de stockage de café torréfié, d'un dispositif de mouture de café torréfié, d'un dispositif de torréfaction de fèves de cacao, d'un dispositif de raffinage de cacao, d'un dispositif de conchage, d'un four destiné à la cuisson de produits de boulangerie, d'un dispositif de refroidissement de produits de boulangerie, d'un dispositif de mouture de fruits séchés et d'un dispositif d'extraction, de désaération ou de concentration de fruits.

19. Appareil selon la revendication 17 ou 18, dans lequel la au moins une colonne d'adsorption comprend une seule colonne d'adsorption (11) qui contient ladite première matrice alimentaire solide et ladite deuxième matrice alimentaire solide.

20. Appareil selon la revendication 17 ou 18, dans lequel ladite au moins une colonne d'adsorption comprend une première colonne d'adsorption (3) qui contient ladite première matrice alimentaire solide et une deuxième colonne d'adsorption (7) qui contient ladite deuxième matrice alimentaire solide et est raccordée pneumatiquement en série à la première colonne d'adsorption (3).

21. Appareil selon une ou plusieurs des revendications 17 à 20, dans lequel chaque colonne d'adsorption (3, 7, 11) contant une matrice alimentaire solide comprend une chemise de refroidissement externe (10).

22. Appareil selon la revendication 21, dans lequel la chemise de refroidissement externe a une température située dans la plage allant de 0 à 30 °C, de préférence de 5 à 20 °C.

23. Appareil selon la revendication 17, **caractérisé en ce que** la colonne d'adsorption (4) pour le dioxyde de carbone comprend une chemise de refroidissement externe (5).

24. Appareil selon une ou plusieurs des revendications 17 à 23, comprenant en outre un dispositif (9) pour éliminer la vapeur d'eau en aval de la chambre (2) qui contient le gaz qui provient d'un procédé de traitement, de préférence dans lequel le dispositif (9) d'élimination de la vapeur d'eau est un réfrigérateur à serpentin.

25. Appareil selon une ou plusieurs des revendications 17 à 24, comprenant en outre un dispositif qui est choisi dans le groupe comprenant un granulateur, un encapsulateur, un microencapsulateur, un nanoencapsulateur et un dispositif d'extrusion à l'état fondu.

26. Appareil selon une ou plusieurs des revendications 17 à 25, dans lequel lesdits moyens de vidange sont une pompe à vide (1) qui est raccordée en aval de ladite au moins une colonne d'adsorption (3, 7, 11).

27. Utilisation en tant qu'ingrédient alimentaire d'une matrice alimentaire solide sur laquelle un ou plusieurs composés odorants sont adsorbés, conformément au procédé selon une ou plusieurs des revendications 1 à 16.

28. Utilisation selon la revendication 27, dans laquelle la matrice alimentaire solide est choisie dans le groupe comprenant un amidon, une cyclodextrine, une maltodextrine, une cellulose microcristalline, une carboxyméthylcellulose, un alginate, une carraghénine, de la gomme arabique, de l'huile de noix de coco, du café torréfié et moulu, du café soluble, de la poudre de cacao, des préparations solubles de poudre de cacao, du lait en poudre et leurs mélanges, de préférence dans laquelle la matrice est du café soluble.
